# EUROPÄISCHE PATENTSCHRIFT

(11) **EP 3 236 161 B1**
(45) Veröffentlichungstag und Bekanntmachung des Hinweises auf die Patenterteilung: **06.11.2019**
(21) Anmeldenummer: 17154346.5
(22) Anmeldetag: 02.02.2017
(51) Int. Cl.: F24D 3/14, B60H 1/00, F24D 19/00, F28D 1/04, F28D 1/053, F28F 1/32, F28D 1/02

(54) **HEIZGERÄT**
HEATING DEVICE
APPAREIL DE CHAUFFAGE

(30) Priorität: 22.04.2016 DE 102016107476
(43) Veröffentlichungstag der Anmeldung: 25.10.2017
(73) Patentinhaber: AURORA Konrad G. Schulz GmbH & Co. KG, 69427 Mudau (DE)
(72) Erfinder: Frasch, Wulf, 86732 Oettingen (DE); Schaarschmidt, Jens, 74834 Elztal-Rittersbach (DE)
(74) Vertreter: Baronetzky, Klaus

(56) Entgegenhaltungen:
- EP-A1- 1 462 748
- WO-A1-2005/053977
- DE-A1- 2 848 530
- US-A- 3 759 320

## Beschreibung

Die Erfindung betrifft ein Heizgerät gemäß dem Oberbegriff von Anspruch 1.

Heizgeräte sind in der stationären und mobilen Heizungstechnik seit Jahrzehnten bekannt. Je nach Anwendungsszenarien und Leistungsbedarf sind Heizgeräte in z.B. ihrer Form und/oder ihrer Größe und/oder ihren Komponenten unterschiedlich.

In manchen Fällen ist eine hohe Wärmeleistung von Heizgeräten für die Beheizung erforderlich, während die Größe der Heizgeräte wegen des Einsatzorts begrenzt sein muss.

Beispielhaft ist es bei Bussen in nördlichen Regionen erforderlich, eine höhere Wärmeleistung trotz gleichbleibendem Platzbedarf des Heizungssystems bereitzustellen.

Heizgeräte, die in ihrer Größe und Wärmeleistung flexibel angepasst werden können, sind stets erwünscht, um den Bedarf bei verschiedenen Anwendungsgebieten zu erfüllen.

Es ist auch erwünscht, dass die Innenstruktur eines Heizgeräts möglichst einfach ist, damit sich möglichst wenige Komponenten des Heizgeräts selbst erwärmen, während die durchströmende Luft möglichst effektiv erwärmt wird.

Es wird außerdem stets versucht, das Gewicht eines Heizgeräts zu reduzieren.

Aus der Druckschrift DE 28 48 530 A1 ist eine Heizungsanlage für ein Haus bekannt, welche eine Vielzahl von Lamellen und ein Vorlaufrohr aufweist. Die Lamellen sind wärmeleitend mit dem Vorlaufrohr verbunden, und einen Heizmedium strömt durch das Vorlaufrohr hindurch.

Die Druckschrift US 3,759,320 A offenbart eine Rippenrohr-Wärmetauscherspule mit schweren Platten, die mit ausgewählten Kernrohren einer Spule verbunden sind, so dass die Platten als starre Verlängerungen innerhalb des zentralen Bereichs einer Spule wirken. Die Platten, die sich von den Rohrböden unterscheiden, können entweder zur Ausrichtung und Montage von Geräten, zum Beispiel eines Motors, in einem festen Verhältnis zur Spule oder zur Montage und Abstützung der Spule von ihrer Mitte oder von ihren Enden in einem festen Verhältnis zu den zugehörigen Geräten verwendet werden.

Die Druckschrift EP 1 462 748 A1 offenbart einen Kühler, der aus einem Wärmetauscher besteht, der in einem offenen Gehäuse vorgesehen ist und der hauptsächlich aus einem oder mehreren Rohren, an denen eine oder mehrere Reihen von Lamellen vorgesehen sind, besteht. Der Abstand zwischen den Lamellen beträgt mindestens drei Millimeter. Oberhalb des Wärmetauschers ist mindestens ein Lüfter vorgesehen, welcher Luft durch den Wärmetauscher ansaugt.

Demgegenüber liegt der Erfindung die Aufgabe zugrunde, ein Heizgerät gemäß dem Oberbegriff von Anspruch 1 zu schaffen, das mit einer relativ kleineren Größe eine hohe Wärmeleistung abgibt, flexibel und einfach zu realisieren ist und ein geringes Gewicht aufweist.

Diese Aufgabe wird erfindungsgemäß durch Anspruch 1 gelöst. Vorteilhafte Weiterbildungen ergeben sich aus den Unteransprüchen.

Das erfindungsgemäße Heizgerät zeichnet sich unter anderem durch eine gegenüber dem Stand der Technik höhere Wärmeleistung aus, aber in vergleichbarer Größe.

Das erfindungsgemäße Heizgerät weist einen ersten Wärmetauscher, mindestens ein erstes Vorlaufrohr und mindestens ein erstes Rücklaufrohr sowie mindestens ein erstes Gehäuse für die Aufnahme des ersten Wärmetauschers, des Gebläses, des ersten Vorlaufrohrs und des ersten Rücklaufrohrs auf, wobei durch die beiden Rohre ein Heizmedium, insbesondere Wasser, hindurchströmt. Ausschließlich das erste Vorlaufrohr, oder ggf. ausschließlich sämtliche ersten Vorlaufrohre, verläuft bzw. verlaufen durch den ersten Wärmetauscher.

Bei einer handüblichen Heizanlage strömt Wasser als Wärmetauschmedium durch Vorlaufrohre und Rücklaufrohre hindurch. Die Temperatur von Wasser im Vorlaufrohr ist höher als die im Rücklaufrohr, weil das Wasser wegen des Wärmetausches mit Luft im Verlauf der Rohre allmählich abkühlt. Wenn die Anzahl der (Vorlauf-)Rohre der Heizanlage vergleichbar mit der der Vorlaufrohre des erfindungsgemäßen Heizgeräts ist, bietet das erfindungsgemäße Heizgerät ersichtlich eine größere Wärmeleistung als die Heizanlage. Denn die Wärmeleistung des Wärmetauschers des erfindungsgemäßen Heizgeräts wird durch die zusätzliche Vorwärmung der Luft an dem Rücklaufrohr erhöht.

Um die Wärmeleistung des erfindungsgemäßen Heizgeräts weiter zu erhöhen, ist mindestens ein Gebläse für den Wärmetauscher vorgesehen. Bevorzugt sind mindestens drei Gebläse für den Wärmetauscher vorgesehen, die insbesondere in einem zueinander etwa gleichen Abstand unter der Längsseite des Wärmetauschers angeordnet sind, damit die durch die Gebläse ausgeblasene Luft die gesamte Längsseite des Wärmetauschers abdeckt.

In einer bevorzugten Ausführungsform ist es vorgesehen, dass die Gebläse mittels eines Befestigungselements auf dem ersten Rücklaufrohr abgestützt angeordnet sind. Erfindungsgemäß ist mit dieser Ausgestaltung ein zusätzliches Element für die Befestigung der Gebläse nicht erforderlich. Einerseits lässt sich erfindungsgemäß das Gewicht des Heizgeräts verringern. Andererseits wird erfindungsgemäß eine ungewünschte Erwärmung dieses Elements vermieden, was die Wärmeleistung des Heizgeräts weiter erhöht. Das Befestigungselement ist bevorzugt am ersten Rücklaufrohr angeklemmt.

In einer weiteren bevorzugten Ausführungsform ist es vorgesehen, dass das erste Rücklaufrohr mittels eines Befestigungselements an den Gebläsen aufgehängt angeordnet ist. Das Befestigungselement ist bevorzugt am Gebläse angeklemmt.

Erfindungsgemäß ist es vorgesehen, dass der erste Wärmetauscher, die Gebläse, das erste Vorlaufrohr und das erste Rücklaufrohr sowie das erste Gehäuse als ein Modul ausgebildet sind. Das Modul ist an mindestens einen Konvektor anzuschließen. Der Konvektor weist einen zweiten Wärmetauscher, mindestens ein zweites Vorlaufrohr und mindestens ein zweites Rücklaufrohr sowie mindestens ein zweites Gehäuse auf, wobei das zweite Vorlaufrohr und das zweite Rücklaufrohr durch den zweiten Wärmetauscher verlaufen oder das zweite Rücklaufrohr unter dem zweiten Wärmetauscher verläuft.

Durch die modularisierte Auslegung ist der Einsatz des erfindungsgemäßen Heizgeräts je nach Bedarf flexibel. Falls eine hohe Wärmeleistung erforderlich ist, die größer als die maximale Wärmeleistung des Moduls ist, ist das Modul an einen oder mehrere der vorstehenden Konvektoren anzuschließen.

In einer weiteren Ausführungsform ist es vorgesehen, dass das Modul an ein anderes gleiches Modul angeschlossen ist.

In einer weiteren Ausführungsform ist es vorgesehen, dass das Modul an ein anderes gleiches Modul und an den Konvektor angeschlossen ist.

Zur Verbindung des Moduls mit dem Konvektor ist es vorgesehen, dass das zweite Vorlaufrohr mit dem ersten Vorlaufrohr sowie das zweite Rücklaufrohr mit dem ersten Rücklaufrohr je mittels eines Verbindungselements, insbesondere einer lösbaren Rohrkupplung, abgedichtet verbunden sind. Das zweite Vorlaufrohr erstreckt sich in Verlängerung des ersten Vorlaufrohres, und das zweite Rücklaufrohr erstreckt sich in Verlängerung des ersten Rücklaufrohres.

In einer bevorzugten Ausführungsform ist es vorgesehen, dass das Modul und der Konvektor etwa eine gleiche Breite und eine gleiche Höhe aufweisen, wobei der Querschnitt des Konvektors insbesondere mit dem des Moduls fluchtet.

In einer weiteren bevorzugten Ausführungsform ist mindestens ein gemeinsames Gehäuse für die Aufnahme des Moduls und des Konvektors vorgesehen, wobei das gemeinsame Gehäuse insbesondere durch Strangpressen hergestellt ist und insbesondere aus Aluminium besteht.

In einer weiteren bevorzugten Ausführungsform ist es vorgesehen, dass das erste Gehäuse des Moduls mit dem zweiten Gehäuse des Konvektors ein gemeinsames Gehäuse bildet, wobei das erste Gehäuse und/oder das zweite Gehäuse insbesondere durch Strangpressen hergestellt ist bzw. sind und insbesondere aus Aluminium besteht bzw. bestehen.

Das erfindungsgemäße Heizgerät weist ein Rückenprofil auf, das sich hinter dem ersten Wärmetauscher und dem Gebläse erstreckt und sich an das erste Gehäuse anschließt. Mindestens der erste Wärmetauscher und/oder das erste Gebläse ist bzw. sind auf dem Rückenprofil platziert. Das Rückenprofil ist bevorzugt durch Strangpressen hergestellt und besteht aus Aluminium.

In einer weiteren bevorzugten Ausführungsform ist es vorgesehen, dass das Rückenprofil mindestens eine Nut aufweist, in die der erste Wärmetauscher oder das Gebläse oder das Gehäuse einsetzbar und befestigt angeordnet ist.

Das erste Gehäuse des Moduls weist mindestens ein Abdeckprofil auf, das sich vor dem ersten Wärmetauscher und dem Gebläse erstreckt und insbesondere eine größere Höhe als die aufsummierte Höhe des Wärmetauschers und des Gebläses aufweist.

Das erste Gehäuse des Moduls weist mindestens einen Oberteil, der sich oberhalb des ersten Wärmetauschers erstreckt, und einen Unterteil auf, der sich unterhalb des ersten Rücklaufrohrs erstreckt.

In einer bevorzugten Ausführungsform ist es vorgesehen, dass der Oberteil des ersten Gehäuses eine Vielzahl von Durchbrechungen aufweist, wobei der Abstand zwischen dem Oberteil und dem ersten Wärmetauscher insbesondere größer als 2 cm ist, und dass der Unterteil auch eine Vielzahl von Durchbrechungen aufweist, wobei der Abstand zwischen dem Unterteil und dem ersten Rücklaufrohr insbesondere größer als 2 cm ist.

Durch die Durchbrechungen des Unterteils und des Oberteils durchströmt die Luft den Unterteil und den Oberteil von unten nach oben. Mit einem ausreichende Abstand zwischen dem Oberteil und dem ersten Wärmetauscher und einem ausreichende Abstand zwischen dem Unterteil und dem ersten Rücklaufrohr wird erfindungsgemäß ein unerwünscht hoher Strömungswiderstand an den Durchbrechungen vermieden.

In einer weiteren bevorzugten Ausführungsform ist es vorgesehen, dass der Oberteil und der Unterteil des ersten Gehäuses schräg zueinander angeordnet sind und je einen Winkel mit der horizontalen Ebene bilden, welcher insbesondere zwischen 5° und 60° beträgt.

In einer modifizierten Ausführungsform ist es vorgesehen, dass die erfindungsgemäßen Wärmetauscher als Verdampfer einer Kühlungsanlage eingesetzt sind.

Bei der Klimatisierung durchströmt warme Luft einen Verdampfer und kühlt dort schnell ab. Die in dieser Luft enthaltenden Wassermoleküle neigen dann dazu, sich an der Oberfläche der Kühlungsanlage niederzuschlagen. Wenn die Kühlungsanlage lange im Betrieb eingesetzt ist, könnten die Gehäuse der Kühlungsanlage durch das kondensierte Wasser erodiert werden.

Erfindungsgemäß wird diese Gefahr vermieden. Die an dem Oberteil und/oder dem Unterteil des ersten Gehäuses kondensierten Wassertropfen fallen aufgrund der schrägen Ausgestaltung des Oberteils und Unterteils ohne weiteres von dem erfindungsgemäßen Heizgerät herunter.

In einer bevorzugten Ausführungsform ist es vorgesehen, dass der erste Wärmetauscher oberhalb der Gebläse liegt und das erste Vorlaufrohr sich parallel zum ersten Rücklaufrohr und oberhalb dieses erstreckt. Die Gebläse sind, über eine Längsseite des ersten Wärmetauschers betrachtet, unter dem mittleren Bereich des ersten Wärmetauschers angeordnet, damit die durch die Gebläse ausgeblasene Luft die gesamte Längsseite des Wärmetauschers abdeckt.

Erfindungsgemäß ist es vorgesehen, dass der durch die Gebläse auszublasende Luftstrom durch das erste Rücklaufrohr vorwärmbar ist.

In einer weiteren bevorzugten Ausführungsform ist es vorgesehen, dass die Gebläse zwischen dem ersten Wärmetauscher und dem ersten Rücklaufrohr angeordnet sind, wobei das erste Rücklaufrohr und/oder das erste Vorlaufrohr insbesondere aus Aluminium bestehen, und wobei die Gebläse insbesondere Axialgebläse oder Doppelradialgebläse sind.

Der erste Wärmetauscher weist eine Vielzahl von Lamellen oder Rippen auf, die mit dem ersten Vorlaufrohr in Wärmeleitverbindung stehen. Das erste Vorlaufrohr verläuft durch die Lamellen oder Rippen. Der zweite Wärmetauscher weist ebenfalls eine Vielzahl von Lamellen oder Rippen auf, die mit dem zweiten Vorlaufrohr und dem zweiten Rücklaufrohr in Wärmeleitverbindung stehen. Das zweite Vorlaufrohr und das zweite Rücklaufrohr verlaufen durch die Lamellen oder Rippen.

Luft strömt von unten nach oben durch das erste Rücklaufrohr, das Gebläse, die Lamellen oder Rippen des ersten Wärmetauschers sowie das erste Vorlaufrohr hindurch. Die Strömungsrichtungen des Heizmediums und von Luft sind etwa senkrecht zueinander. Die Strömungsrichtungen des Heizmediums im ersten Vorlaufrohr und im zweiten Vorlaufrohr sind gleich. Die Strömungsrichtungen des Heizmediums im ersten Rücklaufrohr und im zweiten Rücklaufrohr sind auch gleich. Die Strömungsrichtungen des Heizmediums in den Vorlaufrohren und in den Rücklaufrohren sind zueinander entgegengesetzt.

In einer weiteren bevorzugten Ausführungsform ist es vorgesehen, dass das Heizgerät mindestens ein Einhängeprofil aufweist, das insbesondere durch einen Zuschnitt des Rückenprofils entlang der Richtung senkrecht zur longitudinalen Achse des Rückenprofils hergestellt ist. Die Breite des Einhängeprofils beträgt zwischen 10 bis 60 mm, und mindestens der erste Wärmetauscher und/oder das Gebläse und/oder das erste Gehäuse ist an dem Einhängeprofil eingehängt angeordnet.

In einer weiteren bevorzugten Ausführungsform ist es vorgesehen, dass das zweite Vorlaufrohr und das zweite Rücklaufrohr durch das Entfernen mindestens einer Lamelle oder Rippe gegenüber den übrigen Lamellen oder Rippen in der longitudinalen Richtung des zweiten Wärmetauschers vorragen.

Anschließend sind das zweite Vorlaufrohr und das zweite Rücklaufrohr mittels eines im Wesentlichen U-förmigen-Verbinders, insbesondere einer Rohrkupplung, miteinander abgedichtet verbunden.

In einer weiteren bevorzugten Ausführungsform ist es vorgesehen, dass der Abstand zwischen den Lamellen oder Rippen des ersten Wärmetauschers kleiner als der des zweiten Wärmetauschers ist. Durch die dicht aneinander angeordneten Lamellen oder Rippen des ersten Wärmetauschers wird erfindungsgemäß die Wärmeleistung des durch die Gebläse unterstützenden Moduls weiter erhöht.

In einer weiteren bevorzugten Ausführungsform ist es vorgesehen, dass der Konvektor an mindestens einem Einhängeelement, insbesondere an einem der Einhängprofile, eingehängt angeordnet ist. Das zweite Gehäuse deckt den zweiten Wärmetauscher, das zweite Vorlaufrohr, das zweite Rücklaufrohr und den Verbinder seitlich und an der Vorderseite schützend ab.

In einer weiteren bevorzugten Ausführungsform ist es vorgesehen, dass mindestens ein Teil des Abdeckprofils zu Wartungszwecken abnehmbar ist.

Weitere Vorteile, Einzelheiten und Merkmale ergeben sich aus der nachstehenden Beschreibung von Ausführungsbeispielen der Erfindung anhand der Zeichnungen.

Es zeigen:
Fig. 1 eine schematisch dargestellte Ausführungsform des erfindungsgemäßen Heizgeräts;
Fig. 2 die Ausführungsform des erfindungsgemäßen Heizgeräts gemäß Fig. 1, in der Richtung des Pfeils V betrachtet; und
Fig. 3 eine andere schematisch dargestellte Ausführungsform des erfindungsgemäßen Heizgeräts in Seitenansicht.

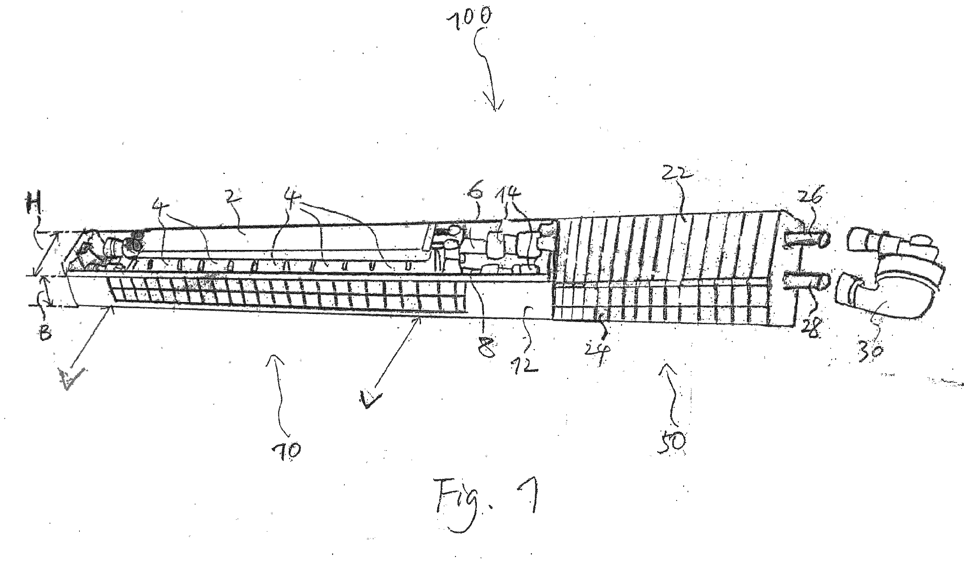

Die in Fig. 1 dargestellte Ausführungsform des erfindungsgemäßen Heizgeräts 100 weist ein Modul 10 und einen Konvektor 50 auf, wobei das Modul 10 an den Konvektor 50 angeschlossen ist.

Durch die modularisierte Auslegung ist der Einsatz des erfindungsgemäßen Heizgeräts 100 je nach Bedarf flexibel. Falls eine höhere Wärmeleistung erforderlich ist, die größer als die maximale Wärmeleistung des Moduls 10 ist, ist das Modul 10 an einen oder mehrere der Konvektoren 50 anzuschließen.

In einer weiteren Ausführungsform (nicht in den Figuren dargestellt) ist es vorgesehen, dass das Modul 10 an ein anderes gleiches Modul 10 angeschlossen ist.

In einer weiteren Ausführungsform (nicht in den Figuren dargestellt) ist es vorgesehen, dass das Modul 10 an ein anderes gleiches Modul 10 und an den Konvektor 50 angeschlossen ist.

Im gemäß Fig. 1 vorliegenden Ausführungsbeispiel weist das Modul 10 einen ersten Wärmetauscher 2, fünf Gebläse 4 für den ersten Wärmetauscher 2, eine Mehrzahl von ersten Vorlaufrohren 6 und ein erstes Rücklaufrohr 8 auf. Durch die ersten Vorlaufrohre 6 und das erste Rücklaufrohr 8 strömt Wasser hindurch. Das Modul 10 weist ferner ein erstes Gehäuse 12 für die Aufnahme des ersten Wärmetauschers 2, der Gebläse 4, der ersten Vorlaufrohre 6 und des ersten Rücklaufrohrs 8 auf, wobei nur ein Teil des ersten Gehäuses 12 in Fig. 1 schematisch dargestellt ist.

Erfindungsgemäß ist es vorgesehen, dass ausschließlich die sämtlichen ersten Vorlaufrohre 6 durch den ersten Wärmetauscher 2 verlaufen.

Bei einer handelsüblichen Heizanlage strömt Wasser als Wärmetauschmedium durch Vorlaufrohre und Rücklaufrohre hindurch. Die Temperatur von Wasser im Vorlaufrohr ist höher als die im Rücklaufrohr, weil das Wasser wegen des Wärmetausches mit Luft im Verlauf der Rohre allmählich abkühlt. Wenn die Anzahl der Rohre der Heizanlage vergleichbar mit der der Vorlaufrohre 6 des erfindungsgemäßen Heizgeräts 100 ist, bietet das erfindungsgemäße Heizgerät 100 ersichtlich eine größere Wärmeleistung als die Heizanlage. Denn die Wärmeleistung des Wärmetauschers 2 des erfindungsgemäßen Heizgeräts 100 wird durch die zusätzliche Vorwärmung der Luft am Rücklaufrohr 8 erhöht.

Durch das Vorsehen der Gebläse 4 wird die Wärmeleistung des Heizgeräts 100 weiter erhöht. Die fünf Gebläse 4 sind in einem zueinander etwa gleichen Abstand an der Längsseite des Wärmetauschers angeordnet, damit die durch die Gebläse ausgeblasene Luft die gesamte Längsseite des Wärmetauschers abdeckt.

Der erfindungsgemäße Konvektor 50 weist einen zweiten Wärmetauscher 22, eine Mehrzahl von zweiten Vorlaufrohren 26 und ein zweites Rücklaufrohr 28 sowie ein zweites Gehäuse (nicht in den Figuren dargestellt) auf.

Im gemäß Fig. 1 vorliegenden Ausführungsbeispiel verlaufen die zweiten Vorlaufrohre 26 und das zweite Rücklaufrohr 28 durch den zweiten Wärmetauscher 22.

Zur Verbindung des Moduls 10 mit dem Konvektor 50 ist es vorgesehen, dass die zweiten Vorlaufrohre 26 mit den ersten Vorlaufrohren 6 sowie das zweite Rücklaufrohr 28 mit dem ersten Rücklaufrohr 8 je mittels eines Verbindungselements 14 abgedichtet verbunden sind.

Die zweiten Vorlaufrohre 26 erstrecken sich je in Verlängerung der ersten Vorlaufrohre 6, und das zweite Rücklaufrohr 28 erstreckt sich in Verlängerung des ersten Rücklaufrohres 8.

Das Modul 10 und der Konvektor 50 weisen etwa eine gleiche Breite B und eine gleiche Höhe H auf, wobei der Querschnitt des Konvektors insbesondere mit dem des Moduls 10 fluchtet.

Das erste Gehäuse 12 des Moduls 10 bildet mit dem zweiten Gehäuse des Konvektors 50 ein gemeinsames Gehäuse, wobei das erste Gehäuse 12 und/oder das zweite Gehäuse insbesondere durch Strangpressen hergestellt ist bzw. sind und insbesondere aus Aluminium besteht bzw. bestehen.

Der erste Wärmetauscher 2 weist eine Vielzahl von Lamellen oder Rippen (nicht in den Figuren dargestellt) auf, die mit den ersten Vorlaufrohren 6 in Wärmeleitverbindung stehen. Die ersten Vorlaufrohre 6 verlaufen durch die Lamellen oder Rippen. Der zweite Wärmetauscher 22 weist auch eine Vielzahl von Lamellen oder Rippen 24 auf, die mit den zweiten Vorlaufrohren 26 und dem zweiten Rücklaufrohr 28 in Wärmeleitverbindung stehen. Die zweiten Vorlaufrohre 26 und das zweite Rücklaufrohr 28 verlaufen durch die Lamellen oder Rippen 24.

Die zweiten Vorlaufrohre 26 und das zweite Rücklaufrohr 28 ragen gegenüber den Lamellen oder Rippen 24 in der longitudinalen Richtung des zweiten Wärmetauschers 22 vor, was durch das Entfernen mindestens einer Lamelle oder Rippe 24 erreicht werden kann.

Die zweiten Vorlaufrohre 26 und das zweite Rücklaufrohr 28 sind mittels eines im Wesentlichen U-förmigen-Verbinders 30 miteinander abgedichtet zu verbinden.

In einer nicht in den Figuren dargestellten Ausführungsform ist es vorgesehen, dass der Abstand zwischen den Lamellen oder Rippen des ersten Wärmetauschers 2 kleiner als der Abstand bei dem zweiten Wärmetauscher 22 ist. Durch die dichter aneinander angeordneten Lamellen oder Rippen des ersten Wärmetauschers 2 wird erfindungsgemäß die Wärmeleistung des durch die Gebläse 4 unterstützenden Moduls 10 weiter erhöht.

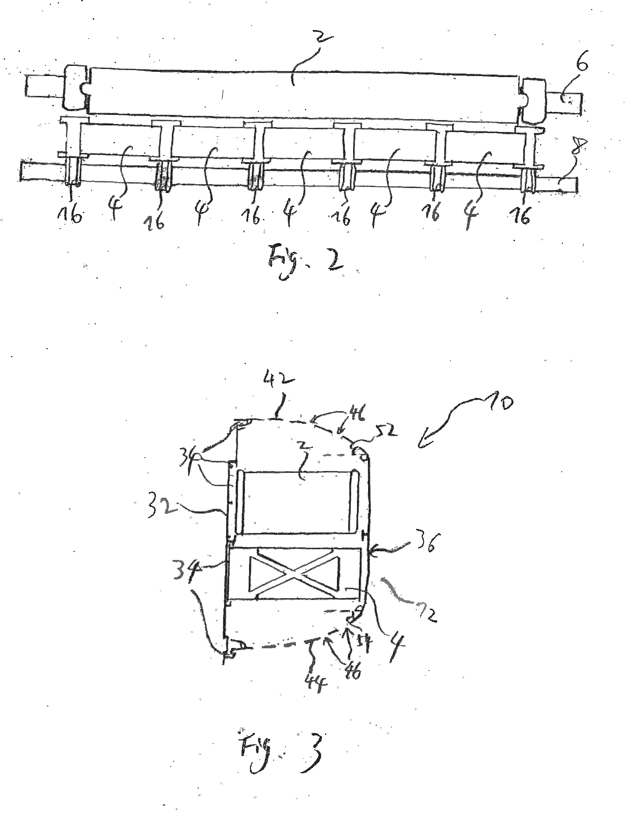

Aus Fig. 2 ist die Anordnung des Moduls 10 ersichtlich. Die fünf Gebläse 4 sind je mittels eines Befestigungselements 16 auf dem ersten Rücklaufrohr 8 abgestützt angeordnet.

Erfindungsgemäß ist mit dieser Ausgestaltung ein zusätzliches Element für die Befestigung der Gebläse 4 nicht erforderlich. Einerseits lässt sich erfindungsgemäß das Gewicht des Heizgeräts 100 verringern. Andererseits wird erfindungsgemäß eine ungewünschte Erwärmung dieses Elements vermieden, was die Wärmeleistung des Heizgeräts 100 weiter erhöht. Die Befestigungselemente 16 sind am ersten Rücklaufrohr 8 angeklemmt.

In einer weiteren nicht in den Figuren dargestellten Ausführungsform ist es vorgesehen, dass das erste Rücklaufrohr 8 mittels mindestens eines Befestigungselements 16 an den Gebläsen 4 aufgehängt angeordnet ist. Das Befestigungselement 16 ist bevorzugt an den Gebläsen 4 angeklemmt.

In der in Fig. 2 dargestellten Ausführungsform ist es vorgesehen, dass der erste Wärmetauscher 2 oberhalb der Gebläse 4 liegt und die ersten Vorlaufrohre 6 sich parallel zum ersten Rücklaufrohr 8 und oberhalb dieses erstrecken. Die Gebläse 4 sind, über eine Längsseite des ersten Wärmetauschers 2 betrachtet, unter dem mittleren Bereich des ersten Wärmetauschers 2 angeordnet, damit die durch die Gebläse 4 ausgeblasene Luft die gesamte Längsseite des Wärmetauschers 2 abdeckt.

In dieser Ausführungsform bestehen das erste Rücklaufrohr 8 und die ersten Vorlaufrohre 6 aus Aluminium. Die Gebläse 4 sind Axialgebläse.

Luft strömt von unten nach oben durch das erste Rücklaufrohr 8, die Gebläse 4, die Lamellen oder Rippen des ersten Wärmetauschers 2 sowie die ersten Vorlaufrohre 6 hindurch. Die Strömungsrichtungen von Wasser und von Luft sind etwa senkrecht zueinander. Die Strömungsrichtungen von Wasser in den ersten Vorlaufrohren 6 und in den zweiten Vorlaufrohren 26 sind gleich. Die Strömungsrichtungen von Wasser im ersten Rücklaufrohr 8 und im zweiten Rücklaufrohr 28 sind auch gleich. Die Strömungsrichtungen von Wasser in den Vorlaufrohren 6, 26 und in den Rücklaufrohren 8, 28 sind zueinander entgegengesetzt.

Erfindungsgemäß ist es vorgesehen, dass der durch die Gebläse 4 auszublasende Luftstrom durch das erste Rücklaufrohr 8 vorwärmbar ist.

Gemäß Fig. 3 weist das erfindungsgemäße Modul 10 ein Rückenprofil 32 auf, das sich hinter dem ersten Wärmetauscher 2 und den Gebläsen 4 erstreckt und an das erste Gehäuse 12 anschließt. Der erste Wärmetauscher 2 und die Gebläse 4 sind auf dem Rückenprofil 32 platziert. Das Rückenprofil 32 ist in dem dargestellten Ausführungsbeispiel durch Strangpressen hergestellt und besteht aus Aluminium.

Das Rückenprofil weist eine Mehrzahl von Nuten 34 auf, in denen der erste Wärmetauscher 2 und die Gebläse 4 sowie das erste Gehäuse 12 eingesetzt und dort befestigt angeordnet sind.

Das erste Gehäuse 12 des Moduls 10 weist ein Abdeckprofil 36 auf, das sich vor dem ersten Wärmetauscher 2 und den Gebläsen 4 erstreckt und eine größere Höhe als die aufsummierte Höhe des Wärmetauschers 2 und der Gebläse 4 aufweist.

Das erste Gehäuse 12 des Moduls 10 weist einen Oberteil 42, der sich oberhalb des ersten Wärmetauschers 2 erstreckt, und einen Unterteil 44 auf, der sich unterhalb des ersten Rücklaufrohrs 8 erstreckt.

In der dargestellten Ausführungsform ist es vorgesehen, dass der Oberteil 42 des ersten Gehäuses 12 eine Vielzahl von Durchbrechungen 46 aufweist, deren Fläche je etwa 8 mm² beträgt. Der Abstand zwischen dem Oberteil 42 und dem ersten Wärmetauscher 2 beträgt etwa 5 cm. Der Unterteil 44 weist ebenfalls eine Vielzahl von Durchbrechungen 46 auf, deren Querschnittsflächen je ebenfalls etwa 8 mm² betragen, wobei der Abstand zwischen dem Unterteil 44 und dem ersten Rücklaufrohr 8 etwa 5 cm beträgt.

Durch die Durchbrechungen 46 des Unterteils 44 und des Oberteils 42 durchströmt die Luft den Unterteil 44 und den Oberteil 42 von unten nach oben. Mit einem ausreichenden Abstand zwischen dem Oberteil 42 und dem ersten Wärmetauscher 2 und einem ausreichenden Abstand zwischen dem Unterteil 44 und dem ersten Rücklaufrohr 8 wird erfindungsgemäß ein unerwünscht hoher Strömungswiderstand an den Durchbrechungen 46 vermieden.

Der Oberteil 42 und der Unterteil 44 des ersten Gehäuses 12 sind schräg zueinander angeordnet und bilden je einen Winkel 52, 54 mit der horizontalen Ebene, welcher im vorliegenden Ausführungsbeispiel etwa 40° beträgt.

In einer anderen nicht dargestellten Ausführungsform kann der erste Wärmetauscher 2 ferner als ein Verdampfer einer Kühlungsanlage ausgebildet sein.

Bei der Klimatisierung durchströmt warme Luft einen Verdampfer und kühlt dort schnell ab. Die in dieser Luft enthaltenden Wassermoleküle neigen dann dazu, sich an der Oberfläche der Kühlungsanlage niederzuschlagen. Wenn die Kühlungsanlage lange im Betrieb eingesetzt ist, könnten die Gehäuse der Kühlungsanlage durch das kondensierte Wasser erodiert werden.

Erfindungsgemäß wird diese Gefahr vermieden. Die an dem Oberteil 42 und dem Unterteil 44 des ersten Gehäuses 12 kondensierten Wassertropfen fallen aufgrund der schrägen Ausgestaltung des Oberteils 42 und des Unterteils 44 ohne weiteres von dem erfindungsgemäßen Heizgerät 100 herunter.

## Patentansprüche

1. Heizgerät (100), mit einem ersten Wärmetauscher (2), mindestens einem Gebläse (4), insbesondere mindestens drei Gebläsen (4), für den ersten Wärmetauscher (2), mindestens einem ersten Vorlaufrohr (6) und mindestens einem ersten Rücklaufrohr (8), durch welche beiden Rohre ein Heizmedium, insbesondere Wasser, hindurchströmt, und mindestens einem ersten Gehäuse (12), welches den ersten Wärmetauscher (2), das Gebläse (4), das erste Vorlaufrohr (6) und das erste Rücklaufrohr (8) aufnimmt, wobei ausschließlich das erste Vorlaufrohr (6), oder ggf. ausschließlich sämtliche ersten Vorlaufrohre (6), durch den ersten Wärmetauscher (2) verläuft bzw. verlaufen, **dadurch gekennzeichnet, dass** die Gebläse (4) auf dem ersten Rücklaufrohr (8) abgestützt angeordnet sind und/oder das erste Rücklaufrohr (8) an den Gebläsen (4) aufgehängt angeordnet ist.

2. Heizgerät (100) nach Anspruch 1, **dadurch gekennzeichnet, dass** der erste Wärmetauscher (2), die Gebläse (4), das erste Vorlaufrohr (6) und das erste Rücklaufrohr (8) sowie das erste Gehäuse (12) als ein Modul (10) an mindestens einen Konvektor (50) angeschlossen sind, der einen zweiten Wärmetauscher (22), mindestens ein zweites Vorlaufrohr (26) und mindestens ein zweites Rücklaufrohr (28) sowie mindestens ein zweites Gehäuse (12) aufweist, wobei das zweite Vorlaufrohr (26) und das zweite Rücklaufrohr (28) durch den zweiten Wärmetauscher (22) verlaufen oder das zweite Rücklaufrohr (28) unter dem zweiten Wärmetauscher (22) verläuft.

3. Heizgerät (100) nach Anspruch 1 oder 2, **dadurch gekennzeichnet, dass** das zweite Vorlaufrohr (26) mit dem ersten Vorlaufrohr (6) sowie das zweite Rücklaufrohr (28) mit dem ersten Rücklaufrohr (8) je mittels eines Verbindungselements (14), insbesondere einer lösbaren Rohrkupplung, abgedichtet verbunden sind, wobei das zweite Vorlaufrohr (26) sich insbesondere in Verlängerung des ersten Vorlaufrohres (6) erstreckt, und wobei das zweite Rücklaufrohr (28) sich insbesondere in Verlängerung des ersten Rücklaufrohres (8) erstreckt.

4. Heizgerät (100) nach einem der vorhergehenden Ansprüche, **dadurch gekennzeichnet, dass** das Modul (10) und der Konvektor (50) etwa eine gleiche Breite und eine gleiche Höhe aufweisen, wobei der Querschnitt des Konvektors (50) insbesondere mit dem des Moduls (10) fluchtet.

5. Heizgerät (100) nach einem der vorhergehenden Ansprüche, **dadurch gekennzeichnet, dass** das Heizgerät (100) mindestens ein gemeinsames Gehäuse für die Aufnahme des Moduls (10) und des Konvektors (50) aufweist, oder dass das erste Gehäuse (12) mit dem zweiten Gehäuse ein gemeinsames Gehäuse bildet, wobei das erste Gehäuse (12) und/oder das zweite Gehäuse und/oder das gemeinsame Gehäuse insbesondere durch Strangpressen hergestellt ist bzw. sind und insbesondere aus Aluminium besteht bzw. bestehen.

6. Heizgerät (100) nach einem der vorhergehenden Ansprüche, **dadurch gekennzeichnet, dass** das Heizgerät (100) ein Rückenprofil (32) aufweist, das sich hinter dem ersten Wärmetauscher (2) und dem Gebläse (4) erstreckt und an das erste Gehäuse (12) anschließt, wobei mindestens der erste Wärmetauscher (2) und/oder das Gebläse (4) auf dem Rückenprofil (32) platziert ist bzw. sind, und wobei das Rückenprofil (32) insbesondere durch Strangpressen hergestellt ist und insbesondere aus Aluminium besteht.

7. Heizgerät (100) nach einem der vorhergehenden Ansprüche, **dadurch gekennzeichnet, dass** das erste Gehäuse (12) mindestens ein Abdeckprofil (36) aufweist, das sich vor dem ersten Wärmetauscher (2) und dem Gebläse (4) erstreckt und insbesondere eine größere Höhe als die aufsummierte Höhe des Wärmetauschers (2) und des Gebläses (4) aufweist.

8. Heizgerät (100) nach einem der vorhergehenden Ansprüche, **dadurch gekennzeichnet, dass** der durch das Gebläse (4) auszublasende Luftstrom durch das erste Rücklaufrohr (8) vorwärmbar ist.

9. Heizgerät (100) nach einem der vorhergehenden Ansprüche, **dadurch gekennzeichnet, dass** das erste Gehäuse (12) mindestens einen Oberteil (42) aufweist, der sich oberhalb des ersten Wärmetauschers (2) erstreckt, wobei der Oberteil (42) eine Vielzahl von Durchbrechungen (46) aufweist, und wobei der Abstand zwischen dem Oberteil (42) und dem ersten Wärmetauscher (2) insbesondere größer als 2 cm ist, und/oder dass das erste Gehäuse (12) mindestens einen Unterteil (44) aufweist, der sich unterhalb des ersten Rücklaufrohrs (8) erstreckt, wobei der Unterteil (44) eine Vielzahl von Durchbrechungen (46) aufweist, und wobei der Abstand zwischen dem Unterteil (44) und dem ersten Rücklaufrohr (8) insbesondere größer als 2 cm ist.

10. Heizgerät (100) nach einem der vorhergehenden Ansprüche, **dadurch gekennzeichnet, dass** der Oberteil (42) und der Unterteil (44) des ersten Gehäuses (12) schräg zueinander angeordnet sind und je einen Winkel (52, 54) mit der horizontalen Ebene bilden, welcher insbesondere zwischen 5o und 60o beträgt.

11. Heizgerät (100) nach einem der vorhergehenden Ansprüche, **dadurch gekennzeichnet, dass** der erste Wärmetauscher (2) eine Vielzahl von Lamellen oder Rippen (24) aufweist, die mit dem ersten Vorlaufrohr (6) in Wärmeleitverbindung stehen, wobei das erste Vorlaufrohr (6) durch die Lamellen oder Rippen (24) verläuft, und dass der zweite Wärmetauscher (22) eine Vielzahl von zweiten Lamellen oder Rippen (24) aufweist, die mit dem zweiten Vorlaufrohr (26) und dem zweiten Rücklaufrohr (28) in Wärmeleitverbindung stehen, wobei das zweite Vorlaufrohr (26) und das zweite Rücklaufrohr (28) durch die zweiten Lamellen oder Rippen (24) verlaufen.

12. Heizgerät (100) nach einem der vorhergehenden Ansprüche, **dadurch gekennzeichnet, dass** Luft von unten nach oben durch das erste Rücklaufrohr (8), das Gebläse (4), die Lamellen oder Rippen (24) des ersten Wärmetauschers (2) sowie das erste Vorlaufrohr (6) hindurchströmt, wobei die Strömungsrichtungen des Heizmediums und von Luft etwa senkrecht zueinander sind, wobei die Strömungsrichtungen des Heizmediums im ersten Vorlaufrohr (6) und im zweiten Vorlaufrohr (26) gleich sind, wobei die Strömungsrichtungen des Heizmediums im ersten Rücklaufrohr (8) und im zweiten Rücklaufrohr (28) gleich sind, und wobei die Strömungsrichtungen des Heizmediums in den Vorlaufrohren (6, 26) und in den Rücklaufrohren (8, 28) einander entgegengesetzt sind.

13. Heizgerät (100) nach einem der vorhergehenden Ansprüche, **dadurch gekennzeichnet, dass** der erste Wärmetauscher (2) oberhalb der Gebläse (4) liegt und das erste Vorlaufrohr (6) sich parallel zum ersten Rücklaufrohr (8) und oberhalb dieses erstreckt, wobei die Gebläse (4), über eine Längsseite des ersten Wärmetauschers (2) betrachtet, insbesondere unter dem mittleren Bereich des ersten Wärmetauschers (2) angeordnet sind.

14. Heizgerät (100) nach einem der vorhergehenden Ansprüche, **dadurch gekennzeichnet, dass** das Gebläse (4) zwischen dem ersten Wärmetauscher (2) und dem ersten Rücklaufrohr (8) angeordnet ist, wobei das erste Rücklaufrohr (8) und/oder das erste Vorlaufrohr (6) insbesondere aus Aluminium besteht, und wobei das Gebläse (4) insbesondere ein Axialgebläse oder ein Doppelradialgebläse ist.

15. Heizgerät (100) nach einem der vorhergehenden Ansprüche, **dadurch gekennzeichnet, dass** mindestens ein Befestigungselement (16) vorgesehen ist, mittels dessen das Gebläse (4) auf dem ersten Rücklaufrohr (8) abgestützt angeordnet ist und/oder das erste Rücklaufrohr (8) an dem Gebläse (4) aufgehängt angeordnet ist, wobei das Befestigungselement (16) insbesondere am Gebläse (4) und/oder am ersten Rücklaufrohr (8) angeklemmt ist.

16. Heizgerät (100) nach einem der vorhergehenden Ansprüche, **dadurch gekennzeichnet, dass** das Rückenprofil (32) mindestens eine Nut (34) aufweist, in die der erste Wärmetauscher (2) oder das Gebläse (4) oder das Gehäuse (12) einsetzbar und befestigt angeordnet ist.

17. Heizgerät (100) nach einem der vorhergehenden Ansprüche, **dadurch gekennzeichnet, dass** das Heizgerät (100) mindestens ein Einhängeprofil aufweist, das insbesondere durch einen Zuschnitt des Rückenprofils (32) entlang der Richtung senkrecht zur longitudinalen Achse des Rückenprofils (32) hergestellt ist, wobei die Breite des Einhängeprofils insbesondere zwischen 10 bis 60 mm beträgt, und wobei mindestens der erste Wärmetauscher (2) und/oder das Gebläse (4) und/oder das erste Gehäuse (12) an dem Einhängeprofil eingehängt angeordnet ist.

18. Heizgerät (100) nach einem der vorhergehenden Ansprüche, **dadurch gekennzeichnet, dass** das zweite Vorlaufrohr (26) und das zweite Rücklaufrohr (28) durch das Entfernen mindestens einer Lamelle oder Rippe (24) gegenüber den übrigen Lamellen oder Rippen (24) in der longitudinalen Richtung des zweiten Wärmetauschers (22) vorragen.

19. Heizgerät (100) nach einem der vorhergehenden Ansprüche, **dadurch gekennzeichnet, dass** der Abstand zwischen den Lamellen oder Rippen (24) des ersten Wärmetauschers (2) kleiner als der des zweiten Wärmetauschers (22) ist.

20. Heizgerät (100) nach einem der vorhergehenden Ansprüche, **dadurch gekennzeichnet, dass** das zweite Vorlaufrohr (26) und das zweite Rücklaufrohr (28) mittels eines Verbinders (30), insbesondere einer Rohrkupplung, miteinander abgedichtet verbunden sind.

21. Heizgerät (100) nach einem der vorhergehenden Ansprüche, **dadurch gekennzeichnet, dass** der Konvektor (50) an mindestens einem Einhängeelement, insbesondere an einem der Einhängprofile, eingehängt angeordnet ist, dass das zweite Gehäuse den zweiten Wärmetauscher (22), das zweite Vorlaufrohr (26), das zweite Rücklaufrohr (28) und den Verbinder (30) seitlich und vorderseitig schützend abdeckt, und dass mindestens ein Teil des Abdeckprofils (36) zu Wartungszwecken abnehmbar ist.

## Claims

1. A heating device (100) comprising a first heat exchanger (2), at least one blower (4), especially at least three blowers (4), for the first heat exchanger (2), at least one first feed pipe (6) and at least one first return pipe (8), through which two pipes a heating medium, especially water, is flowing, and at least one first housing (12) which accommodates the first heat exchanger (2), the blower (4), the first feed pipe (6) and the first return pipe (8), wherein only the first feed pipe (6), or, if appropriate, the first return pipe (8), extend through the first heat exchanger (2), respectively, **characterized in that** the blowers (4) are supportedly arranged on the first return pipe (8) and/or the first return pipe (8) is suspendedly arranged on the blowers (4).

2. The heating device (100) according to claim 1, **characterised in that** the first heat exchanger (2), the blowers (4), the first feed pipe (6) and the first return pipe (8) as well as the first housing (12), as a module (10), are connected to at least one convector (50) which is a second heat exchanger (22), comprising at least one second feed pipe (26) and at least one second return pipe (28) and at least one second housing (12), wherein the second feed pipe (26) and the second return pipe (28) extend through the second heat exchanger (22), or the second return pipe (28) extends below the second heat exchanger (22).

3. The heating device (100) according to claim 1 or 2, **characterised in that** the second feed pipe (26) Is sealingly connected to the first feed pipe (6) and the second return pipe (28) are each sealingly connected to the first return pipe (8) by using a connecting element (14), especially a detachable pipe coupling, wherein the second feed pipe (26) especially extends in extension of the first feed pipe (6), and wherein the second return pipe (28) especially extends in extension of the first return pipe (8).

4. The heating device (100) according to one of the preceding claims, **characterized in that** the module (10) and the convector (50) have approximately the same width and height, the cross section of the convector (50) especially being aligned with that of the module (10).

5. The heating device (100) according to one of the preceding claims, **characterized in that** the heating device (100) has at least one common housing for accommodating both the module (10) and the convector (50), or **in that** the first housing (12) forms a common housing with the second housing, the first housing (12) and/or the second housing and/or the common housing being produced especially by extrusion and consisting especially of aluminum.

6. The heating device (100) according to one of the preceding claims, **characterized in that** the heating device (100) comprises a back profile (32) extending behind the first heat exchanger (2) and the blower (4) and is attached to the first housing (12), at least the first heat exchanger (2) and/or the blower (4) being placed on the back profile (32), the back profile (32) being especially made by extrusion and especially being made of aluminum.

7. The heating device (100) according to one of the preceding claims, **characterized in that** the first housing (12) comprises at least one cover profile (36) extending in front of the first heat exchanger (2) and the blower (4) and especially having a height greater than the summed height of the heat exchanger (2) and the blower (4).

8. The heating device (100) according to one of the preceding claims, **characterized in that** the air flow to be expelled by the blower (4) may be preheated through the first return pipe (8).

9. The heating device (100) according to one of the preceding claims, **characterized in that** the first housing (12) comprises at least one top part (42) extending above the first heat exchanger (2), the top part (42) comprising a plurality of through holes (46), the distance between the top part (42) and the first heat exchanger (2) being especially greater than 2 cm, and/or **In that** the first housing (12) has at least one bottom part (44) which extends below the first return pipe (8), the bottom part (44) comprising a plurality of through holes (46), and the distance between the bottom part (44) and the first return pipe (8) being especially greater than 2 cm.

10. The heating device (100) according to one of the preceding claims, **characterized in that** the top part (42) and the bottom part (44) of the first housing (12) are arranged obliquely with respect to each another and each one forming an angle (52, 54) with the horizontal plane which is especially between 5º and 60º.

11. The heating device (100) according to one of the preceding claims, **characterized in that** the first heat exchanger (2) comprises a plurality of fins or ribs (24) which are connected with the first feed pipe (6) in a heat-conductive manner, the first feed pipe (6) extending through the fins or ribs (24), and **in that** the second heat exchanger (22) has a plurality of second fins or ribs (24) which are in heat-conducting connection with the second feed pipe (26) and the second return pipe (28), the second feed pipe (26) and the second return pipe (28) extending through the second fins or ribs (24).

12. The heating device (100) according to one of the preceding claims, **characterized in that** air flows from bottom to top through the first return pipe (8), the blower (4), the fins or ribs (24) of the first heat exchanger (2) and the first feed pipe (6), the flow directions of the heating medium and air being approximately perpendicular to each other, the flow directions of the heating medium in the first feed pipe (6) and in the second feed pipe (26) being identical, the flow directions of the heating medium in the first return pipe (8) and in the second return pipe (28) being Identical, and the flow directions of the heating medium In the feed pipes (6, 26) and in the return pipes (8, 28) being opposite to each another,

13. The heating device (100) according to one of the preceding claims, **characterized in that** the first heat exchanger (2) is located above the blowers (4) and the first feed pipe (6) extends parallel to and above the first return pipe (8), the blowers (4) being arranged especially below the central region of the first heat exchanger (2), as viewed across a long side of the first heat exchanger (2).

14. The heating device (100) according to one of the preceding claims, **characterized In that** the blower (4) is arranged between the first heat exchanger (2) and the first return pipe (8), the first return pipe (8) and/or the first feed pipe (6) being especially made of aluminum, and the blower (4) being especially an axial blower or a double radial blower.

15. The heating device (100) according to one of the preceding claims, **characterized in that** at least one fastening element (16) is provided, by the use of which the blower (4) will supportedly be arranged on the first return pipe (8) and/or the first return pipe (8) is suspendedly arranged on the blower (4), the fastening element (16) especially being clamped to the blower (4) and/or to the first return pipe (8).

16. The heating device (100) according to one of the preceding claims, **characterized in that** the back profile (32) comprises at least one groove (34) into which the first heat exchanger (2) or the blower (4) or the housing (12) can be inserted and fastened.

17. The heating device (100) according to one of the preceding claims, **characterized in that** the heating device (100) comprises at least one suspension profile which is manufactured especially by cutting the back profile (32) along the direction perpendicular to the longitudinal axis of the back profile (32), the width of the suspension profile being especially between 10 and 60 mm, and at least the first heat exchanger (2) and/or the blower (4) and/or the first housing (12) being arranged suspended from the suspension profile.

18. The heating device (100) according to one of the preceding claims, **characterized in that** the second feed pipe (26) and the second return pipe (28) project in the longitudinal direction of the second heat exchanger (22) in relation to the remaining fins or ribs (24) by removing at least one fin or rib (24).

19. The heating device (100) according to one of the preceding claims, **characterized In that** the distance between the fins (24) of the first heat exchanger (2) is smaller than that of the second heat exchanger (22).

20. The heating device (100) according to one of the preceding claims, **characterized In that** the second feed pipe (26) and the second return pipe (28) are sealingly connected with each other by using a connector (30), especially a pipe coupling.

21. The heating device (100) according to one of the preceding claims, **characterized in that** the convector (50) is suspendedly arranged on at least one suspension element, especially on one of the suspension profiles, **in that** the second housing protectively covers the second heat exchanger (22), the second feed pipe (26), the second return pipe (28) and the connector (30) laterally and frontally, and **in that** at least part of the cover profile (36) is removable for maintenance purposes.

## Revendications

1. Appareil de chauffage (100), avec un premier échangeur de chaleur (2), au moins un ventilateur (4), en particulier au moins trois ventilateurs (4), pour le premier échangeur de chaleur (2), au moins un premier tuyau d'alimentation (6) et au moins un premier tuyau de retour (8), et un moyen de chauffage, en particulier de l'eau, s'écoule à travers ces deux tuyaux, et au moins un premier boitier (12), qui accueille le premier échangeur de chaleur (2), le ventilateur (4), le premier tuyau d'alimentation (6) et le premier tuyau de retour (8), où uniquement le premier tuyau d'alimentation (6), ou éventuellement uniquement les premiers tuyaux d'alimentation (6) ensemble, passent à travers le premier échangeur de chaleur (2), **caractérisé en ce que** les ventilateurs (4) est disposé soutenu sur le premier tuyau de retour (8) et/ou le premier tuyau de retour (8) est suspendu sur le ventilateur (4).

2. Appareil de chauffage (100) selon la revendication 1, **caractérisé en ce que** le premier échangeur de chaleur (2), le ventilateur (4), le premier tuyau d'alimentation (6) et le premier tuyau de retour (8) ainsi que le premier boîtier (12) sont reliés en tant que module (10) à au moins un convecteur (50) qui comprend un deuxième échangeur de chaleur (22), au moins un deuxième tuyau d'alimentation (26) et au moins un deuxième tuyau de retour (28) et au moins un second boitier (12) où le deuxième tuyau d'alimentation (26) et le deuxième tuyau de retour (28) passent par le deuxième échangeur de chaleur (22) ou le deuxième tuyau de retour (28) passe sous le deuxième échangeur de chaleur (22).

3. Appareil de chauffage (100) selon la revendication 1 ou 2, **caractérisé en ce que** le deuxième tuyau d'alimentation (26) est relié de manière étanche avec le premier tuyau d'alimentation (6) ainsi que le deuxième tuyau de retour (28) avec le premier tuyau de retour (8) respectivement au moyen d'un élément de raccordement (14), en particulier un raccord de tuyaux détachable, où le deuxième tuyau d'alimentation (26) s'étend en particulier dans l'extension du premier tuyau d'alimentation (6), et où le deuxième tuyau de retour (28) s'étend en particulier dans l'extension du premier tuyau de retour (8).

4. Appareil de chauffage (100) selon l'une des revendications précédentes, caractérisé en cela le module (10) et le convecteur (50) présentent une largeur et une hauteur à peu près égales, où la section transversale du convecteur (50) affleure en particulier celle du module (10).

5. Appareil de chauffage (100) selon l'une des revendications précédentes, **caractérisé en ce que** le appareil de chauffage (100) présente au moins un boitier commun pour accueillir le module (10) et du convecteur (50), ou que le premier boitier (12) forme un boitier commun avec le deuxième boitier, où le premier boitier (12) et/ou le deuxième boitier et/ou le boitier commun est fabriqué ou sont fabriqués par extrusion et en particulier est ou sont faits en aluminium.

6. Appareil de chauffage (100) selon l'une des revendications précédentes, **caractérisé en ce que** le appareil de chauffage (100) présente un profil arrière (32) qui s'étend derrière le premier échangeur de chaleur (2) et le ventilateur (4) et est connecté au premier boîtier (12), où au moins le premier échangeur de chaleur (2) et/ou le ventilateur (4) est placé ou sont placés sur le profil arrière (32), et où le profil arrière (32) est fabriqué en particulier par extrusion et en particulier est fait en aluminium.

7. Appareil de chauffage (100) selon l'une des revendications précédentes, **caractérisé en ce que** le premier boitier (12) présente au moins un profil de couverture (36) qui s'étend devant le premier échangeur de chaleur (2) et le ventilateur (4) et en particulier présente une hauteur supérieure à la hauteur totale de l'échangeur de chaleur (2) et du ventilateur (4).

8. Appareil de chauffage (100) selon l'une des revendications précédentes, **caractérisé en ce que** le flux d'air à souffler à travers le ventilateur (4) peut être préchauffé par le premier tuyau de retour (8).

9. Appareil de chauffage (100) selon l'une des revendications précédentes, **caractérisé en ce que** le premier boitier (12) comporte au moins une partie supérieure (42) qui s'étend au-dessus du premier échangeur de chaleur (2), où la partie supérieure (42) présente une pluralité d'ouvertures (46), et où la distance entre la partie supérieure (42) et le premier échangeur de chaleur (2) est en particulier supérieure à 2 cm, et/ou que le premier boîtier (12) présente au moins une partie inférieure (44) qui s'étend en dessous du tuyau du premier tuyau de retour (8), où la partie inférieure (44) présente une pluralité d'ouvertures (46), et où la distance entre la partie inférieure (44) et le premier tuyau de retour (8) est en particulier supérieure à 2 cm.

10. Appareil de chauffage (100) selon l'une des revendications précédentes, **caractérisé en ce que** la partie supérieure (42) et la partie inférieure (44) du premier boitier (12) sont disposées perpendiculaire l'une par rapport à l'autre et forment chacune un angle (52, 54) avec le plan horizontal qui est en particulier entre 5º et 60º.

11. Appareil de chauffage (100) selon l'une des revendications précédentes, **caractérisé en ce que** le premier échangeur de chaleur (2) présente une pluralité de lamelles ou de nervures (24) qui sont en liaison de conduction thermique avec le premier tuyau d'alimentation (6), où le premier tuyau d'alimentation (6) passe a travers les lamelles ou les nervures (24) et que le deuxième échangeur de chaleur (22) présente une pluralité de deuxièmes lamelles ou nervures (24) qui sont en liaison de conduction thermique avec le deuxième tuyau d'alimentation (26) et le deuxième tuyau de retour (28),où le deuxième tuyau d'alimentation (26) et le deuxième tuyau de retour (28) passent à travers les lamelles ou les deuxièmes nervures ou lamelles (24).

12. Appareil de chauffage (100) selon l'une des revendications précédentes, **caractérisé en ce que** de l'air passe de bas en haut à travers le premier tuyau de retour (8), le ventilateur (4), les lamelles ou les nervures (24) du premier échangeur de chaleur (2) ainsi que le premier tuyau d'alimentation (6), où la direction de flux du moyen de chauffage et celle de l'air sont approximativement verticales l'une par rapport à l'autre, où la direction d'écoulement du milieu de chauffage dans le premier tuyau d'alimentation (6) et dans le deuxième tuyau d'alimentation (26) sont égales, où la direction d'écoulement du milieu de chauffage dans le premier tuyau de retour (8) et dans le deuxième tuyau de retour (28) sont égales, et où la direction d'écoulement du milieu de chauffage dans les tuyaux d'alimentation (6, 26) et celle dans les tuyaux de retour (8, 28) sont opposées l'une par rapport à l'autre.

13. Appareil de chauffage (100) selon l'une des revendications précédentes, **caractérisé en ce que** le premier échangeur de chaleur (2) se trouve au-dessus du ventilateur (4) et le premier tuyau d'alimentation (6) s'étend parallèle au au premier tuyau de retour (8) et au-dessus de celui-ci, où les ventilateurs, (4), considéré depuis un côté longitudinal du premier échangeur de chaleur (2), sont disposés en particulier sous la région centrale du premier échangeur de chaleur (2).

14. Appareil de chauffage (100) selon l'une des revendications précédentes, **caractérisé en ce que** le ventilateur (4) est disposé entre le premier échangeur de chaleur (2) et le premier tuyau de retour (8), où le premier tuyau de retour (8) et/ou le premier tuyau d'alimentation (6) est fait en particulier en aluminium, et où le ventilateur (4) est en particulier un ventilateur axial ou un ventilateur radial double.

15. Appareil de chauffage (100) selon l'une des revendications précédentes, **caractérisé en ce qu'**au moins un élément de fixation (16) est fourni, au moyen duquel le ventilateur (4) est monté sur le premier tuyau de retour (8) et/ou le premier tuyau de retour (8) est disposé suspendu sur le ventilateur (4), où l'élément de fixation (16) en particulier est serré au ventilateur (4) et/ou sur le premier tuyau de retour (8).

16. Appareil de chauffage (100) selon l'une des revendications précédentes, **caractérisé en ce que** le profil arrière (32) présente au moins une rainure (34) dans laquelle le premier échangeur de chaleur (2) ou le ventilateur (4) ou le boîtier (12) peut être inséré et fixés.

17. Appareil de chauffage (100) selon l'une des revendications précédentes, **caractérisé en ce que** l'appareil de chauffage (100) présente au moins un profil de suspension, qui est fabriqué en particulier par une coupe dans l'arrière-profii (32) le long de la direction verticale à l'axe longitudinal du profil arrière (32), où la largeur du profil de suspension est en particulier entre 10 à 60 mm, et où au moins le premier échangeur de chaleur (2) et/ou le ventilateur (4) et/ou le premier boîtier (12) est disposé suspendu au profil de suspension.

18. Appareil de chauffage (100) selon l'une des revendications précédentes, **caractérisé en ce que** le deuxième tuyau d'alimentation (26) et le deuxième tuyau de retour (28) font saillie dans la direction longitudinale du deuxième échangeur de chaleur (22) en enlevant au moins une lamelle ou une nervure (24) par rapport aux autres lamelles ou nervures

19. Appareil de chauffage (100) selon l'une des revendications précédentes, **caractérisé en ce que** la distance entre les lamelles ou les nervures (24) du premier échangeur de chaleur (2) est plus petite que celle du deuxième échangeur de chaleur (22).

20. Appareil de chauffage (100) selon l'une des revendications précédentes, **caractérisé en ce que** le deuxième tuyau d'alimentation (26) et le deuxième tuyau de retour (28) sont reliés entre eux de manière étanche au moyen d'un connecteur (30), en particulier un raccord de tuyaux.

21. Appareil de chauffage (100) selon l'une des revendications précédentes, **caractérisé en ce que** le convecteur (50) est suspendu sur au moins un élément de suspension, en particulier sur l'un des profils de suspension, que le deuxième boîtier couvre et protège le deuxième échangeur de chaleur (22), le deuxième tuyau d'alimentation (26), le deuxième tuyau de retour (28) et le connecteur (30) sur le côté avant, et qu'au moins une partie du profil de couverture (36) est amovible à des fins d'entretien.
